Europäisches Patentamt

European Patent Office

Office européen des brevets

(11) veröffentlichungsnummer: **0 016 377**
A1

(12) **EUROPÄISCHE PATENTANMELDUNG**

(21) Anmeldenummer: 80101119.8

(22) Anmeldetag: 05.03.80

(51) Int. Cl.³: **B 32 B 27/12**

(30) Priorität: 15.03.79 DE 2910233

(43) Veröffentlichungstag der Anmeldung:
01.10.80 Patentblatt 80/20

(84) Benannte Vertragsstaaten:
AT BE CH DE FR GB IT LU NL SE

(71) Anmelder: Alkor GmbH Kunststoffverkauf
Morgensternstrasse 9 Postfach 71 0109
D-8000 München 71(DE)

(72) Erfinder: Landler, Josef
Schiessstädtstrasse 84
D-8190 Wolfratshausen(DE)

(72) Erfinder: Mayr, Max
Frank-Caro-Strasse 63
D-8261 Hart/Alz(DE)

(74) Vertreter: Weickmann, Heinrich, Dipl.-Ing
Patentanwälte Dipl.Ing.H.Weickmann et al,
Dipl.Phys.Dr.K.Fincke Dipl.Ing.F.A.Weickmann
Dipl.Chem.B.Huber, Dr.-Ing.H.Liska Möhlstrasse 22
D-8000 München 86(DE)

(54) Verfahren zum Aufbringen einer Oberflächenveredelungsschicht auf eine Trägerplatte.

(57) Bei einem Verfahren zum Aufbringen einer Oberflächenveredelungsschicht auf eine Trägerplatte, welche ein thermoplastisches Bindemittel enthält, durch Andrücken der Oberflächenveredelungsschicht auf die Trägerplatte bei einer erhöhten Temperatur in der Berührungsfläche wird die Verwendung einer faserhaltigen Schicht als Verbindungsschicht zwischen der Oberflächenveredelungsschicht und der Trägerplatte vorgeschlagen, wobei die Fasern der faserhaltigen Schicht teilweise gegen die Hauptebene der Schicht geneigt sind.

EP 0 016 377 A1

Croydon Printing Company Ltd.

CCH

- 1 -

Verfahren zum Aufbringen einer Oberflächenveredelungsschicht auf eine Trägerplatte

Die Erfindung betrifft ein Verfahren zum Aufbringen einer Oberflächenveredelungsschicht auf eine Trägerplatte,
welche ein thermoplastisches Bindemittel enthält, durch
Andrücken der Oberflächenveredelungsschicht auf die Trägerplatte bei einer erhöhten Temperatur in der Berührungsfläche.

Das Aufbringen von Oberflächenveredelungsschichten auf
eine solche Trägerplatte wird beispielsweise geübt, um
Dekorschichten auf Trägerplatten für die Herstellung von
Automobilauskleidungsteilen aufzubringen. Dabei wird
nach einem bekannten Verfahren eine PVC-Folie als Oberflächenveredelungsschicht auf eine sogenannte POHM-Platte aufgebracht, das ist eine Platte, welche aus einem
thermoplastischen Bindemittel, insbesondere Polypropylen, und einem Füller, insbesondere einem Füller auf
Cellulosebasis und hierbei insbesondere wieder einem
Holzmehlfüller, aufgebracht wird. Die Vereinigung der
PVC-Folie mit der POHM-Platte geschieht dabei in der
Weise, daß nach Erhitzen der POHM-Platte diese auf
das Unterwerkzeug einer Presse gelegt wird und die PVC-
Folie mit einer Kleberschicht auf eine Kleberschicht der POHM-Platte aufgelegt wird, worauf die PVC-Folie und die POHM-Platte durch die Werkzeuge der Presse zusammengedrückt werden.

Bei diesem bekannten Verfahren sind verschiedene, bisher ungelöste Probleme aufgetreten.

Ein erstes Problem ergibt sich daraus, daß PVC-Folien wie auch viele andere in Frage kommenden Oberflächenveredelungsschichten im wesentlichen luft- und dampfundurchlässig sind, so daß beim Zusammenpressen eines PVC-Folienzuschnitts mit einer POHM-Platte die Gefahr kaum zu vermeiden ist, daß Luft und/oder Dampfeinschlüsse zwischen der PVC-Folie und der POHM-Platte gebildet werden, welche nicht mehr verschwinden. Um diesem Problem beizukommen, hat man bereits die PVC-Folie mit Mikroperforationen versehen, durch welche Dampf- oder Gaseinschlüsse abziehen konnten. Die Notwendigkeit zur Mikroperforation ist aber natürlich eine Einschränkung in der Gestaltungsfreiheit der Oberflächenveredelungsschicht.

Ein anderes schwerwiegendes Problem ist darin zu sehen, daß der Halt einer PVC-Folie, wie auch anderer Oberflächenveredelungsschichten auf der Trägerplatte sehr hohen Anforderungen unterliegt: Man bedenke, daß beispielsweise bei Verwendung in der Innenauskleidung von Automobilteilen auf die PVC-Folie sehr hohe Temperaturen infolge Sonneneinstrahlung einwirken können. Durch diese hohen Temperaturen können in der Folie latente Spannungen freiwerden und zu einer Schrumpftendenz führen, welche den Verbund zwischen Folie und Trägerplatte beansprucht. Um einen solchen Beanspruchungen auch nur annähernd standhaltenden Verbund zu schaffen, ist man so vorgegangen, daß man sowohl auf die Folie als auch auf die

POHM-Platte einen Klebstoff aufgetragen hat, der beim späteren Zusammendrücken von Folie und Trägerplatte reaktiviert wurde. Diese Verfahrensweise führte aber zu erheblichen verfahrenstechnischen Problemen. Es mußte dann nämlich nach dem Aufspritzen des Klebers die Verbindung der Folie mit der POHM-Platte innerhalb vorbestimmter Zeit von beispielsweise einem Tag hergestellt werden, da der Kleber sonst nicht mehr aktiviert werden konnte. Dies bedeutete Termindruck in dem Verarbeitungswerk. Die mit Kleber bespritzten Folien und Trägerplatten konnten auch nicht ohne weiteres aufeinandergestapelt gelagert werden, da jedenfalls bei hohen Stapeldrücken die Gefahr eines Aneinanderklebens aufeinanderfolgender Schichten bestand. Die Notwendigkeit, Folie und Trägerplatte innerhalb kurzer Zeit von beispielsweise einem Tag miteinander zu verbinden, um die zeitlich beschränkte Aktivierbarkeit der in Frage kommenden Klebstoffe auszunützen, verbot es, die Folien und die Trägerplatten in den jeweiligen Herstellerwerken bereits mit der Klebstoffschicht zu beschichten, so daß die Klebstoffbeschichtung häufig Verarbeitern überlassen werden mußte, die von der maschinellen und personellen Ausstattung her häufig weniger geeignet sind, um Klebstoffbeschichtungen, die im Hinblick auf Lösungsmittel häufig auch Umweltschutzprobleme aufwerfen, aufzutragen.

Der Erfindung liegt die Aufgabe zugrunde, die Verbindung einer Oberflächenveredelungsschicht und einer Trägerplatte mit verringerter oder völlig ausgeschlossener Gefahr von Gas- und Dampfeinschlüssen so durchzuführen, daß auch bei hohen Beanspruchungen im Betrieb, beispielsweise infolge Hitzeeinwirkung, ein bleibender Verbund zwischen Oberflächenveredelungsschicht und Trägerplatte besteht; dabei sollen die Verarbeitungsprobleme möglichst reduziert und - sofern nicht überhaupt ausschaltbar - auf die Herstellerwerke der Oberflächenveredelungsschichten und/oder der Trägerplatten konzentriert werden.

Zur Lösung dieser Aufgabe wird erfindungsgemäß die Verwendung einer faserhaltigen Schicht als Verbindungsschicht zwischen der Oberflächenveredelungsschicht und der Trägerplatte vorgeschlagen, wobei die Fasern der faserhaltigen Schicht teilweise gegen die Hauptebene der Schicht geneigt sind.

Die Verwendung der faserhaltigen Schicht bei dem erfindungsgemäßen Verfahren.löst das Problem der Vermeidung von Gas- und/oder Dampfeinschlüssen dadurch, daß sich etwa bildende Gas- und/oder Dampfeinschlüsse innerhalb der faserhaltigen Schicht ausgleichen und durch diese hindurch entweichen können. Dadurch, daß die Fasern der faserhaltigen Schicht teilweise gegen die Hauptebene der Schicht geneigt sind, wird eine Verankerung in den angrenzenden Schichten, nämlich der Oberflächenveredelungsschicht und der Trägerplatte, erreicht, so daß der Verbund zwischen Oberflächenveredelungsschicht und Trägerplatte gefördert wird. Es hat sich gezeigt, daß eine Trennung der Oberflächenveredelungsschicht von der Trägerplatte durch eine Spaltung der faserhaltigen Schicht nicht möglich ist, wenn die Bedingung erfüllt ist, daß die Fasern der faserhaltigen Schicht teilweise gegen die Hauptebene der Schicht geneigt sind. Die gegen die Hauptebene der Schicht geneigten Fasern lagern sich beim Andrücken in das durch die erhöhte Temperatur plastifizierte Bindemittel der Trägerplatte ein und finden dort nach dem anschließenden Wiederabkühlen einen festen Halt, der allen Ansprüchen genügt.

Das erfindungsgemäße Verfahren eignet sich insbesondere dazu, um thermoplastische Bahnen als Oberflächenveredelungsschichten auf Trägerplatten aufzubringen. Solche thermoplastische Bahnen können PVC-Bahnen sein, die sich wegen ihrer Bedruckbarkeit und ihrer Prägbarkeit besonders als Dekorschichten eignen. Ebenfalls geeignet sind Schaum-PVC-Bahnen mit integral mit dem Schaum zusammenhängender glatter oder genarbter Oberfläche.

Als Trägerplatten kommen insbesondere Platten in Frage, welche neben dem thermoplastischen Bindemittel einen Füller und gegebenenfalls eine thermoplastische, mit dem Bindemittel zusammenhängende Deckschicht enthalten. Besonders geeignete Trägerplatten enthalten als thermoplastisches Bindemittel ein Polyolefin und als Füller ein Cellulosematerial. Ein herausragender Vertreter dieser letzteren Plattenmaterialien sind die sogenannten POHM-Platten, welche als thermoplastisches Bindemittel Polypropylen oder Polyäthylen und als Füller Holzmehl, vorzugsweise in einem Mischungsverhältnis von ca. 1 : 1 enthalten.

Als faserhaltige Schicht bietet sich wegen der Forderung nach gegen die Hauptebene geneigten Faseranteilen insbesondere ein Nadelvlies an. Durch eine Behandlung mit Nadeln, welche eine Vliesschicht vielfach durchdringen, können in bekannter Weise Vliesschichten mit zunächst vorwiegend parallel zur Hauptebene eingestellten Fasern so beeinflußt werden, daß ein erheblicher Anteil dieser Fasern teils senkrecht, teils geneigt gegen die Hauptebene steht.

Die geneigten Nadelvliese lassen sich, je nach Bedarfsfall, durch einfache Vorversuche bestimmen. Es hat sich gezeigt, daß die Nadelvliese, gleich welcher Art die Fa-

- 6 -

sern sind, mindestens ein Flächengewicht von 5o g/m$^2$, vorzugsweise von mehr als 7o g/m$^2$ besitzen sollen, damit die Möglichkeit des Ausgleichs von Dampf- und/oder Gasblasen besteht.

Die mittlere Faserlänge sollte bei den zur Anwendung kommenden Nadelvliesen etwa 4o bis 6o mm betragen. Sie sollte wenigstens annähernd so groß sein wie die Dicke der Faserschicht. Um die Verbindung der faserhaltigen Schicht mit der Trägerplatte zu begünstigen, empfiehlt es sich, Nadelvliese zu verwenden, welche eine chemische Affinität zum thermoplastischen Material der Trägerplatte besitzen, also zu dem Bindemittel oder zu der Deckschicht der Trägerplatte.

Unter chemischer Affinität wird verstanden, daß sich die Fasern in dem thermoplastischen Material der Trägerplatte, wenn dieses thermoplastifiziert mit den Fasern in Berührung gebracht wurde und nachträglich abgekühlt wurde, fest verankern.

Im Falle der in der Praxis vielfach angewandten Polypropylen enthaltenden Trägerplatten bietet sich als faserhaltige Schicht insbesondere ein Polypropylenfaservlies an.

Um auch einen guten Verbund zwischen der Oberflächenveredelungsschicht und der faserhaltigen Schicht herzustellen, kann es erwünscht sein, daß auch zwischen diesen beiden Schichten eine chemische Affinität im oben definierten Sinne besteht.

Erweist es sich nicht als möglich, aus einer einzigen Faser eine Faserschicht zu bilden, welche gleichermaßen gute chemische Affinität zu der Oberflächenveredelungsschicht und zu dem thermoplastischen Material der Trägerplatte besitzt, so kann man auf die Verwendung eines Mischfaservlieses als Verbindungsschicht zurückgreifen, welches sowohl Fasern mit chemischer Affinität zum thermoplastischen Material der Trägerplatte als auch Fasern mit chemischer Affinität zum thermoplastischen Material der Oberflächenveredelungsschicht besitzt.

Eine bevorzugte Durchführungsform des erfindungsgemäßen Verfahrens sieht vor, daß man die Oberflächenveredelungsschicht vorab mit der faserhaltigen Schicht verbindet und die aus der Oberflächenveredelungsschicht und der faserhaltigen Schicht bestehende Verbundschicht anschließend mit der Trägerplatte verbindet. Dabei ist es grundsätzlich möglich, die Oberflächenveredelungsschicht mit der faserhaltigen Schicht durch Hitzekaschieren zu verbinden, wenn geeignete Fasern mit ausreichender Affinität zu der jeweiligen Oberflächenschicht zur Verfügung stehen. Es ist aber ohne weiteres auch möglich, die Oberflächenveredelungsschicht mit der faserhaltigen Schicht unter Vermittlung üblicher Haftvermittler oder Kleber zu verbinden. Diese Verbindung kann ja im Herstellerwerk der Oberflächenveredelungsschicht erfolgen und berührt den Verarbeiter, welcher die spätere Verbindung zwischen der Oberflächenveredelungsschicht und der Trägerplatte durchzuführen hat, nicht.

Die Verbindung der in einer ersten Stufe hergestellten Verbundschicht aus Oberflächenveredelungsschicht und faserhaltiger Schicht mit der Trägerplatte wird in aller Regel durch Hitzekaschieren erfolgen. Dies kann in der Weise geschehen, daß man die Trägerplatte auf eine Temperatur erhitzt, bei welcher die Fasern der faserhaltigen Schicht in dem thermoplastischen Material der Trägerplatte verankert werden und daß man die Verbundschicht sodann auf die Trägerplatte aufpreßt. Bei diesem Preßvorgang kann gleichzeitig eine dreidimensionale Verformung der Trägerplatte erfolgen, beispielsweise um räumliche Innenauskleidungsteile von Kraftfahrzeugen zu gewinnen.

Es hat sich gezeigt, daß bei dem erfindungsgemäßen Verfahren Luft-, Gas- und Dampfeinschlüsse mit hoher Sicherheit vermieden werden können, so daß auf Mikroperforationen der Oberflächenveredelungsschicht verzichtet werden kann.

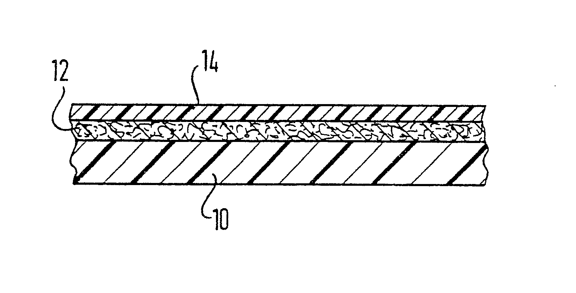

Die beiliegende Figur zeigt einen Schnitt durch eine nach dem erfindungsgemäßen Verfahren hergestellte Verbundplatte. In dieser Figur ist mit 1o eine Trägerplatte bezeichnet, mit 12 eine faserhaltige Verbindungsschicht und mit 14 eine Dekorschicht. Die Dekorschicht 14 besteht insbesondere aus gedrucktem und geprägtem Polyvinylchlorid, das mit der faserhaltigen Schicht 12, einem Nadelvlies auf Polypropylenfaserbasis verklebt ist, während die faserhaltige Schicht 12 ihrerseits mit der Trägerplatte einer POHM-Platte durch Hitzekaschierung verbunden ist. Die Hitzekaschierung wurde dabei in der Weise durchgeführt, daß die POHM-Platte (Polypropylen-Holzmehl-Platte) auf 17o$^{o}$C erhitzt wurde und die aus den beiden Schichten 12, 14 gebildete Verbundschicht auf die heiße POHM-Platte aufgelegt und mit dieser verpreßt wurde.

Beispielsweise kann als Nadelvlies das Produkt Paramoll N 269 auf Polypropylenfaserbasis mit einem Flächengewicht von 1oo g/m$^2$ verwendet werden.

- 1 -

P a t e n t a n s p r ü c h e

1.    Verfahren zum Aufbringen einer Oberflächenveredelungsschicht auf eine Trägerplatte, welche ein thermoplastisches Bindemittel enthält, durch Andrücken der
Oberflächenveredelungsschicht auf die Trägerplatte bei
einer erhöhten Temperatur in der Berührungsfläche,
g e k e n n z e i c h n e t   durch die Verwendung einer faserhaltigen Schicht als Verbindungsschicht zwischen der Oberflächenveredelungsschicht und der Trägerplatte, wobei die Fasern der faserhaltigen Schicht teilweise gegen die Hauptebene der Schicht geneigt sind.

2.    Verfahren nach Anspruch 1, dadurch  g e k e n n -
z e i c h n e t , daß als Oberflächenveredelungsschicht
eine thermoplastische Bahn aufgebracht wird.

3.    Verfahren nach Anspruch 2, dadurch  g e k e n n -
z e i c h n e t , daß als thermoplastische Bahn eine
PVC-Bahn aufgebracht wird, insbesondere eine Schaum-PVC-
Bahn mit integral damit zusammenhängender glatter oder
genarbter Oberfläche.

4.    Verfahren nach einem der Ansprüche 1 bis 3, dadurch  g e k e n n z e i c h n e t , daß als Trägerplat-

te eine Platte verwendet wird, welche zumindest an der veredelungsseitigen Oberfläche thermoplastisches Material enthält.

5. Verfahren nach einem der Ansprüche 1 bis 4, dadurch g e k e n n z e i c h n e t , daß als Trägerplatte eine Platte verwendet wird, welche ein thermoplastisches Bindemittel und einen Füller und gegebenenfalls eine thermoplastische Deckschicht enthält.

6. Verfahren nach Anspruch 4, dadurch g e k e n n - z e i c h n e t , daß als Trägerplatte eine Platte verwendet wird, welche als thermoplastisches Bindemittel ein Polyolefin und als Füller ein Cellulosematerial enthält.

7. Verfahren nach Anspruch 6, dadurch g e k e n n - z e i c h n e t , daß als Trägerplatte eine Platte verwendet wird, welche als thermoplastisches Bindemitttel Polypropylen und als Füller Holzmehl, vorzugsweise in einem Mischungsverhältnis von ca. 1 : 1 enthält.

8. Verfahren nach einem der Ansprüche 1 bis 7, dadurch g e k e n n z e i c h n e t , daß man als faserhaltige Schicht ein Nadelvlies verwendet.

9. Verfahren nach Anspruch 8, dadurch g e k e n n - z e i c h n e t , daß man ein Nadelvlies verwendet, welches ein Flächengewicht von mindestens 5o g/m$^2$, vorzugsweise mindestens 8o g/m$^2$ besitzt.

1o. Verfahren nach einem der Ansprüche 8 und 9, dadurch g e k e n n z e i c h n e t , daß man ein Nadelvlies verwendet, welches eine chemische Affinität zum thermoplastischen Material der Trägerplatte besitzt.

0016377

11. Verfahren nach Anspruch 1o, dadurch g e k e n n - z e i c h n e t , daß man im Falle einer Polypropylen enthaltenden Trägerplatte ein Polypropylenfaservlies verwendet.

12. Verfahren nach einem der Ansprüche 8 bis 11, da- durch g e k e n n z e i c h n e t , daß man ein Nadel- vlies verwendet, welches eine chemische Affinität zur Oberflächenveredelungsschicht besitzt.

13. Verfahren nach Anspruch 12, dadurch g e k e n n - z e i c h n e t , daß man im Falle des Vorhandenseins unterschiedlicher thermoplastischer Materialien in der Trägerplatte und der Oberflächenveredelungsschicht ein Mischfaservlies als Verbindungsschicht verwendet, welches sowohl Fasern mit chemischer Affinität zum thermoplastischen Material der Trägerplatte als auch Fasern mit chemischer Affinität zum thermoplastischen Material der Oberflächenveredelungsschicht besitzt.

14. Verfahren nach einem der Ansprüche 1 bis 3, da- durch g e k e n n z e i c h n e t , daß man die Ober- flächenveredelungsschicht vorab mit der faserhaltigen Schicht verbindet und die aus Oberflächenveredelungsschicht und faserhaltiger Schicht bestehende Verbundschicht anschließend mit der Trägerplatte verbindet.

15. Verfahren nach Anspruch 14, dadurch g e k e n n - z e i c h n e t , daß man die Oberflächenveredelungs- schicht mit der faserhaltigen Schicht durch Hitzekaschieren verbindet.

16. Verfahren nach einem der Ansprüche 1 bis 14, da- durch g e k e n n z e i c h n e t , daß man die Ober- flächenveredelungsschicht mit der faserhaltigen Schicht unter Verwendung eines Haftvermittlers verbindet.

17. Verfahren nach einem der Ansprüche 14 bis 16, dadurch g e k e n n z e i c h n e t , daß man die Verbundschicht auf der Trägerplatte durch Hitzekaschieren befestigt.

18. Verfahren nach Anspruch 17, dadurch g e k e n n z e i c h n e t , daß man die Trägerplatte auf eine Temperatur erhitzt, bei welcher die Fasern der faserhaltigen Schicht in dem thermoplastischen Material der Trägerplatte verankert werden und daß man die Verbundschicht sodann auf die Trägerplatte aufpreßt.

19. Verfahren nach Anspruch 18, dadurch g e k e n n z e i c h n e t , daß man beim Andrücken der Oberflächenveredelungsschicht an die Trägerplatte die Trägerplatte dreidimensional verformt.

## EUROPÄISCHER RECHERCHENBERICHT

**Europäisches Patentamt**

Nummer der Anmeldung

EP 80 10 1119

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | B 32 B 27/12 |
| | <u>DE - A - 2 650 628</u> (H. LINDENBERG) <br> * Ansprüche 1-6; Seite 4, Zeile 25 - Seite 8, Zeile 23 * <br><br> -- | 1-8, 14-19 | |
| A | <u>DE - A - 2 829 387</u> (COURTAULDS) | | |
| A | <u>DE - A - 1 560 896</u> (MOLNLYCKE) | | |
| A | <u>US - A - 3 026 229</u> (F.S. WILCOX) | | |
| E | <u>EP - A - 0 010 246</u> (BASF) <br> * Ansprüche 1-7; Seite 2, Zeile 8 - Seite 6, Zeile 27; Seite 7, Zeile 21 - Seite 8, Zeile 31; Beispiele 1-3 * <br><br> ---- | 1-15, 17,19 | RECHERCHIERTE SACHGEBIETE (Int. Cl. 3) <br><br> B 32 B |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-06-1980 | BLASBAND |

EPA form 1503.1 06.78